(19) Europäisches Patentamt / European Patent Office / Office européen des brevets

(11) **EP 3 471 046 A1**

(12) **EUROPEAN PATENT APPLICATION**
published in accordance with Art. 153(4) EPC

(43) Date of publication:
**17.04.2019 Bulletin 2019/16**

(51) Int Cl.:
**G06Q 40/02** (2012.01)     **G06Q 10/06** (2012.01)

(21) Application number: **17812514.2**

(86) International application number:
**PCT/CN2017/085049**

(22) Date of filing: **19.05.2017**

(87) International publication number:
**WO 2017/215403 (21.12.2017 Gazette 2017/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.06.2016 CN 201610416661**

(71) Applicant: **Tencent Technology (Shenzhen) Company Limited**
**Shenzhen, Guangdong 518057 (CN)**

(72) Inventors:
• **CHEN, Peixuan**
  **Shenzhen**
  **Guangdong 518057 (CN)**
• **CHEN, Qian**
  **Shenzhen**
  **Guangdong 518057 (CN)**
• **CHEN, Ling**
  **Shenzhen**
  **Guangdong 518057 (CN)**

(74) Representative: **EP&C**
**P.O. Box 3241**
**2280 GE Rijswijk (NL)**

(54) **METHOD AND APPARATUS FOR ASSESSING USER CREDIT, AND STORAGE MEDIUM**

(57) This application discloses a user credit rating method and apparatus. The method includes: obtaining offline feature information of a target user, the offline feature information being feature information of the user updated according to a preset update period; calculating an offline credit score of the target user according to the offline feature information of the target user and a preset offline prediction model; obtaining real-time feature information of the target user, the real-time feature information being feature information of the user collected in a preset time range from a current time, and the preset time range being less than the preset update period; calculating a real-time credit score of the target user according to the real-time feature information of the target user and a preset real-time prediction model; and calculating a comprehensive credit score of the target user according to the offline credit score, the real-time credit score, and a preset comprehensive prediction model. This application further provides the corresponding apparatus and a storage medium.

| | |
|---|---|
| Obtain offline feature information of a target user, the offline feature information being feature information of the user updated according to a preset update period | S101 |
| Calculate an offline credit score of the target user according to the offline feature information of the target user and a preset offline prediction model | S102 |
| Obtain real-time feature information of the target user, the real-time feature information being feature information of the user collected in a preset time range from a current time, and the preset time range being less than the preset update period | S103 |
| Calculate a real-time credit score of the target user according to the real-time feature information of the target user and a preset real-time prediction model | S104 |
| Calculate a comprehensive credit score of the target user according to the offline credit score, the real-time credit score, and a preset comprehensive prediction model | S105 |

FIG. 1

EP 3 471 046 A1

**Description**

RELATED APPLICATION

This application claims priority to Chinese Patent Application No. 201610416661.1, entitled "USER CREDIT RATING METHOD AND APPARATUS" filed on June 12, 2016, which is incorporated by reference in its entirety.

FIELD OF THE TECHNOLOGY

This application relates to the field of Internet technologies, and in particular, to a user credit rating method and apparatus, and a storage medium.

BACKGROUND OF THE DISCLOSURE

In recent years, with the rapid development of Internet technologies, people perform an increasing number of data services on the Internet, and a user credit rating has become a focus in the field of Internet technologies.
In a user credit rating manner in the related art, personnel information of a user is collected, and then the default risk of the user is predicted by using some prediction algorithm in a statistical model or using machine learning, such as a frequently used FICO credit scoring system and a Zestfinace credit scoring system. Usually, the personal information (big data) used in an existing credit scoring mechanism is updated according to a preset update period, and the update period is usually one month or longer. Reference may be made to a change of the user, causing an information lag, and greatly affecting the accuracy of user credit rating.

SUMMARY

An embodiment of this application provides a user credit rating method. The method includes:

obtaining offline feature information of a target user, the offline feature information being feature information of the user updated according to a preset update period;

calculating an offline credit score of the target user according to the offline feature information of the target user and a preset offline prediction model;

obtaining real-time feature information of the target user, the real-time feature information being feature information of the user collected in a preset time range from a current time, and the preset time range being less than the preset update period;

calculating a real-time credit score of the target user according to the real-time feature information of the target user and a preset real-time prediction model; and

calculating a comprehensive credit score of the target user according to the offline credit score, the real-time credit score, and a preset comprehensive prediction model.

Correspondingly, an embodiment of this application further provides a user credit rating apparatus. The apparatus includes:

an offline feature obtaining module, configured to obtain offline feature information of a target user, the offline feature information being feature information of the user updated according to a preset update period;

an offline scoring module, configured to calculate an offline credit score of the target user according to the offline feature information of the target user and a preset offline prediction model;

a real-time feature obtaining module, configured to obtain real-time feature information of the target user, the real-time feature information being feature information of the user collected in a preset time range from a current time, and the preset time range being less than the preset update period;

a real-time scoring module, configured to calculate a real-time credit score of the target user according to the real-time feature information of the target user and a preset real-time prediction model; and

a comprehensive scoring module, configured to calculate a comprehensive credit score of the target user according to the offline credit score, the real-time credit score, and a preset comprehensive prediction model.

An embodiment of this application further provides a computer readable storage medium, storing computer readable instructions which enable at least one processor to execute the foregoing method.

By means of the solutions provided in this application, the accuracy of user credit rating may be improved.

BRIEF DESCRIPTION OF THE DRAWINGS

To describe the technical solutions in the embodiments of this application or in the related art more clearly, the following briefly describes the accompanying drawings required for describing the embodiments or the related art. Apparently, the accompanying drawings in the following description show merely some embodiments of this application, and a person of ordinary skill in the art may still derive other drawings from these accompanying drawings without creative efforts.

FIG. 1 is a schematic flowchart of a user credit rating method according to an embodiment of this application;

FIG. 2 is a schematic source diagram of obtaining real-time feature information and offline feature information of a user according to an embodiment of this application;

FIG. 3 is a schematic flowchart of training an offline prediction model according to an embodiment of this application;

FIG. 4 is a schematic flowchart of training a real-time prediction model according to an embodiment of this application;

FIG. 5 is a schematic flowchart of training a comprehensive prediction model according to an embodiment of this application;

FIG. 6 is a schematic structural diagram of a user credit rating apparatus according to an embodiment of this application; and

FIG. 7 is a schematic structural diagram of a sample obtaining module according to an embodiment of this application.

DESCRIPTION OF EMBODIMENTS

The following clearly and completely describes the technical solutions in the embodiments of this application with reference to the accompanying drawings in the embodiments of this application. Apparently, the described embodiments are some embodiments of this application rather than all of the embodiments. All other embodiments obtained by a person of ordinary skill in the art based on the embodiments of this application without creative efforts shall fall within the protection scope of this application.

A user credit rating method and apparatus in the embodiments of this application may be implemented in a computer system such as a personal computer, a notebook computer, an intelligent mobile phone, a tablet computer, or an e-reader, and mostly, may be used in a server that provides user credit rating, for example, a background server of a data service platform. The following provides descriptions by using a user credit rating apparatus as an execution body of the embodiments of this application.

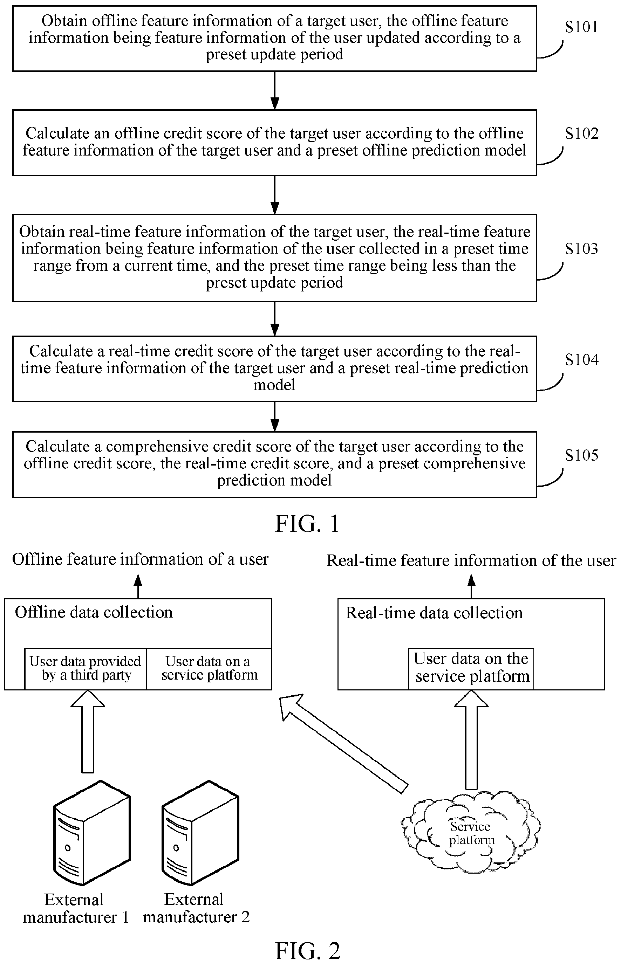

FIG. 1 is a schematic flowchart of a user credit rating method according to an embodiment of this application. As shown in the figure, a process of the user credit rating method in this embodiment may include the following steps:

S 101: Obtain offline feature information of a target user, the offline feature information being feature information of the user updated according to a preset update period.

As shown in FIG. 2, a user credit rating apparatus may obtain the offline feature information by collecting user data provided by a third party or may obtain the offline feature information from user data collected by a service platform. The user credit rating apparatus may perform feature calculation on the obtained user data, and convert a user attribute, a user behavior, or a user attribute/behavior in the user data into offline feature information having a unified format, for example, digitalized feature information. The preset update period may be an update period for an external manufacturer to provide user data, or may be a collection update period set by the user credit rating apparatus. Because bit data involves a large user base, and the offline feature information may include all historical feature information of a user, there is an enormous amount of data. Therefore, the preset update period is relatively long, and is usually at least one week to one month. In an optional embodiment, the offline feature information may be relatively stable feature information of the user, for example, an attribute such as a gender, an age, a native place, a job, or earnings, and may further include all historical contract-related credit records. Such relatively stable feature information of the user only needs to be updated according to the preset update period. Therefore, information of these feature categories is used as the offline feature information.

In an optional embodiment, the offline feature information may be selected offline feature information of a feature category. That is, the user data provided by the third party or the user data collected by the service platform may include offline feature information of a plurality of feature categories, and the user credit rating apparatus may select offline feature information of a specified feature category from the offline feature information of the plurality of feature categories. The specified feature category may be obtained by the user credit rating apparatus according to preset training sample data. The training sample data includes credit scoring result samples of a plurality of users and offline feature information samples of a plurality of feature categories of each user. The training sample data is also referred to as user credit data. The user credit rating apparatus calculates a correlation between each feature category and a credit scoring result according to the credit scoring result samples of the plurality of users and the offline feature information samples of the plurality of feature categories of each user in the user credit sample data, so as to determine, as the specified feature category, a feature category for which a correlation with the credit scoring result reaches a preset threshold.

S102: Calculate an offline credit score of the target user according to the offline feature information of the target user and a preset offline prediction model.

The offline prediction model may be a trained logistic regression classification model or a trained integrated learning model, deep learning model, random forest model, or the like. The user credit rating apparatus substitutes the offline feature information of the target user into the preset offline prediction model, so as to calculate the offline credit score of the target user.

The offline prediction model may be obtained by the user credit rating apparatus by performing training according to preset training sample data. The training sample data may include the credit scoring result samples of the plurality of users and the offline feature information of each user. The offline prediction model may alternatively be a trained offline prediction model obtained by the user credit rating apparatus from the external.

S103: Obtain real-time feature information of the target user, the real-time feature information being feature information of the user collected in a preset time range from a current time, and the preset time range being less than the preset update period.

As shown in FIG. 2, the user credit rating apparatus may obtain the real-time feature information from user data collected by a service platform. The user credit rating apparatus may perform feature calculation on the obtained user data, and convert a user attribute, a user behavior, or a user attribute/behavior in the user data into real-time feature information having a unified format, for example, digitalized feature information. The service platform may collect latest feature information of the user, the preset time range being less than the preset update period, for example, the feature information of the user collected in one or two recent days or in a recent week. In an optional embodiment, the user credit rating apparatus may preset some feature categories as high-risk features. When feature information of the user and corresponding to the high-risk features changes, a credit score of the user is greatly affected. For example, the user enables a loan service on a particular platform or applies for an overseas visa, a geographic location of the user changes, or a large spending amount is produced in a particular field. For these high-risk features that need to be focused in real time, the user credit rating apparatus may use the corresponding feature information as the real-time feature information of the user for real-time collection and recording. Other feature information is used as the offline feature information for updating the preset update period.

Likewise, the real-time feature information may be selected real-time feature information of a feature category. That is, the user data collected by the service platform may include real-time feature information of a plurality of feature categories, and the user credit rating apparatus may select real-time feature information of a specified feature category from the real-time feature information of the plurality of feature categories. The specified feature category may be obtained by the user credit rating apparatus according to preset training sample data. The training sample data includes credit scoring result samples of a plurality of users and real-time feature information samples of a plurality of feature categories of each user. The training sample data is referred to as user credit sample data. The user credit rating apparatus calculates a correlation between each feature category and a credit scoring result according to the credit scoring result samples of the plurality of users and the real-time feature information samples of the plurality of feature categories of each user in the user credit sample data, so as to determine, as the specified feature category, a feature category for which a correlation with the credit scoring result reaches a preset threshold.

S104: Calculate a real-time credit score of the target user according to the real-time feature information of the target user and a preset real-time prediction model.

The real-time prediction model may be a trained logistic regression classification model or a trained integrated learning model, deep learning model, random forest model, or the like. The user credit rating apparatus substitutes the real-time feature information of the target user into the preset real-time prediction model, so as to calculate the real-time credit score of the target user.

The real-time prediction model may be obtained by the user credit rating apparatus by performing training according to preset training sample data. The training sample data may include the credit scoring result samples of the plurality of users and the offline feature information of each user. The real-time prediction model may alternatively be a trained real-time prediction model obtained by the user credit rating apparatus from the external.

S105: Calculate a comprehensive credit score of the target user according to the obtained offline credit score and real-time credit score of the target user in combination with a preset comprehensive prediction model.

The comprehensive prediction model may be a trained logistic regression classification model or a trained integrated learning model, deep learning model, random forest model, gradient boosting decision tree model, or the like. The user credit rating apparatus substitutes the offline credit score and the real-time credit score of the target user into the preset real-time prediction model, so as to calculate the real-time credit score of the target user.

The comprehensive prediction model may be obtained by the user credit rating apparatus by performing training according to preset training sample data. The training sample data may include the credit scoring result samples of the plurality of users and the offline feature information and the real-time feature information of each user. After obtaining the offline credit score of each user by using the offline prediction model according to the offline feature information of each user and obtaining the real-time credit score of each user by using the real-time prediction model according to the real-time feature information of each user, the user credit rating apparatus trains the comprehensive prediction model according to credit scoring results of the plurality of users and the offline credit score and the real-time credit score of each user. The real-time prediction model may alternatively be a trained real-time prediction model obtained by the user credit rating apparatus from the external.

Exemplarily, the real-time credit score of the target user may be calculated by using the comprehensive prediction model of the following logistic regression algorithm:

$$\text{Score} = 1/(1+\exp(-(\alpha*\text{Score1}+\beta*\text{Score2}+\gamma)))$$

$\alpha$, $\beta$, and $\gamma$ being parameters obtained by training the model, Score 1 and Score2 being respectively the offline credit score and the real-time credit score of the target user, and the result Score being the comprehensive credit score of the target user.

Further, in an optional embodiment, the user credit rating apparatus may push product information such as financial product information or fixed asset management product information to the target user according to the comprehensive credit score of the target user calculated in the foregoing step in this embodiment, or monitor and manage a data service of the target user according to the comprehensive credit score of the target user, for example, performing risk control management on a loan service of the target user or providing a management suggestion for flowing funds of the target user.

According to the user credit rating method provided in this application, the offline credit score and the real-time credit score of the user are respectively calculated by obtaining the offline feature information and the real-time feature information of the user, so as to calculate the comprehensive credit score of the user, thereby accurately predicting a credit status of the user in combination with long-term feature data and real-time feature data of the user, and resolving a problem of inaccurate credit rating caused by an information lag of the user in the prior art.

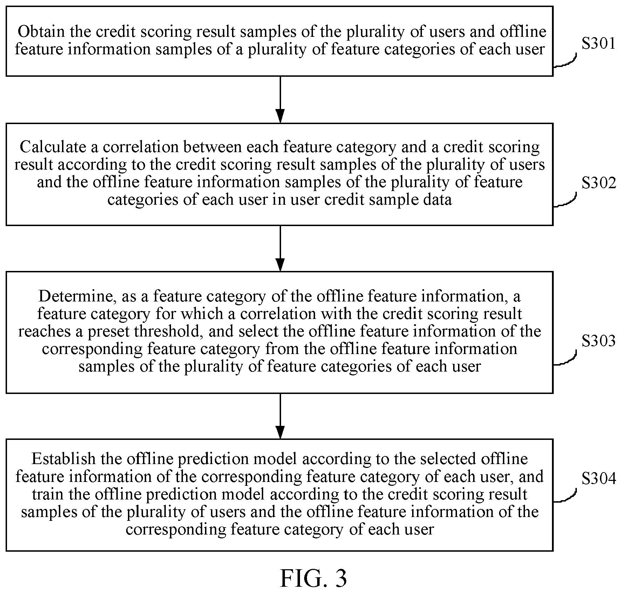

FIG. 3 is a schematic flowchart of training an offline prediction model according to an embodiment of this application. As shown in the figure, a training process of the offline prediction model in this embodiment may include the following steps:

S301: Obtain the credit scoring result samples of the plurality of users and offline feature information samples of a plurality of feature categories of each user.

Optionally, the credit scoring result samples of the plurality of users and the offline feature information samples of the plurality of feature categories of each user may be extracted from the training sample data input to the user credit rating apparatus.

Alternatively, the credit scoring result samples of the plurality of users may be calculated by using default records of the plurality of users. That is, the credit scoring result samples of the plurality of users is determined according to whether the default statuses of the plurality of users, or the number of and the severity of default events, or the like. In an optional embodiment, the credit scoring result samples of the plurality of users may alternatively be obtained by means of human scoring. Further, after the scoring result samples of the plurality of users are obtained, the user credit rating apparatus may obtain the offline feature information samples of the plurality of feature categories of each user by collecting the user data provided by the third party or from the user data collected by the service platform.

S302: Calculate a correlation between each feature category and a credit scoring result according to the credit scoring result samples of the plurality of users and the offline feature information samples of the plurality of feature categories of each user.

The user credit sample data includes the credit scoring result samples of the plurality of users and the offline feature information samples of the plurality of feature categories of each user. The feature category may be, for example, an age, a location, a gender, or a job. The correlation between each feature category and the credit scoring result reflects impact of the age, the gender, the job, or the like on the credit scoring result of the user. If the correlation is relatively high, it indicates that the feature category relatively greatly affects the credit scoring result; otherwise, it indicates that the feature category slightly affects the credit scoring result. Therefore, offline feature information of the feature category is not considered when the offline prediction model is being established.

Specifically, exemplarily, the correlation r between each feature category and the credit scoring result may be calculated by using the following formula:

$$r = \frac{\sum_{i=1}^{n}(x_i - \bar{x})(y_i - \bar{y})}{\sqrt{\sum_{i=1}^{n}(x_i - \bar{x})^2 \cdot \sum_{i=1}^{n}(y_i - \bar{y})^2}}$$

$$= \frac{n\sum_{i=1}^{n}x_i y_i - \sum_{i=1}^{n}x_i \sum_{i=1}^{n}y_i}{\sqrt{n\sum_{i=1}^{n}x_i^2 - (\sum_{i=1}^{n}x_i)^2} \cdot \sqrt{n\sum_{i=1}^{n}y_i^2 - (\sum_{i=1}^{n}y_i)^2}}$$

x being offline feature information of a feature category, y being a credit scoring result of a user, and the subscript i represents that a different user is corresponding to.

In another optional embodiment, the correlation between each feature category and the credit scoring result may alternatively be calculated by using a correlation algorithm based on an IV value, a chi-squared value, or the like.

S303: Determine, as a feature category of the offline feature information, a feature category for which a correlation with the credit scoring result reaches a preset threshold, and select the offline feature information of the corresponding feature category from the offline feature information samples of the plurality of feature categories of each user.

After the correlation between each feature category and the credit scoring result is calculated, the correlation may be compared with the corresponding preset threshold, a feature category for which a correlation meets a requirement is determined as the feature category of the offline feature information, and the offline feature information of the corresponding feature category is selected from the offline feature information samples of the plurality of feature categories of each user.

S304: Establish the offline prediction model according to the selected offline feature information of the corresponding feature category of each user, and train the offline prediction model according to the credit scoring result samples of the plurality of users and the offline feature information of the corresponding feature category of each user.

The offline prediction model may be a trained logistic regression classification model or a trained integrated learning model, deep learning model, random forest model, or the like. The offline prediction model may be a prediction formula for the user credit rating apparatus to calculate a credit score of a user according to the selected offline feature information of the corresponding feature category of each user and in combination with a particular model parameter. Training iterations are performed on a model parameter in the prediction formula by using the credit scoring result samples of the plurality of users and the offline feature information of the corresponding feature category of each user, thereby obtaining a model parameter in the prediction formula and closest to the credit scoring result samples, and obtaining the trained offline prediction model.

It should be noted that S302 and S303 are optional steps. In an optional embodiment, all of the obtained offline feature information samples of the plurality of feature categories of each user may be used, without selection, as the offline feature information to train the real-time prediction model.

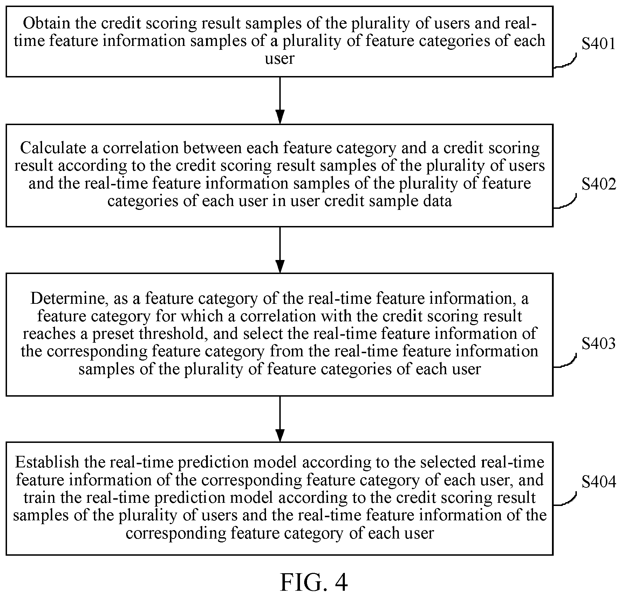

FIG. 4 is a schematic flowchart of training a real-time prediction model according to an embodiment of this application. As shown in the figure, a training process of the real-time prediction model in this embodiment may include the following steps:

S401: Obtain the credit scoring result samples of the plurality of users and real-time feature information samples of a plurality of feature categories of each user.

Optionally, the credit scoring result samples of the plurality of users and the real-time feature information samples of the plurality of feature categories of each user may be extracted from the training sample data input to the user credit rating apparatus.

Alternatively, the credit scoring result samples of the plurality of users may be calculated by using default records of the plurality of users. That is, the credit scoring result samples of the plurality of users is determined according to whether the default statuses of the plurality of users, or the number of and the severity of default events, or the like. In an optional embodiment, the credit scoring result samples of the plurality of users may alternatively be obtained by means of human scoring. Further, after the scoring result samples of the plurality of users are obtained, the user credit rating apparatus may obtain the real-time feature information samples of the plurality of feature categories of each user from the user data collected by the service platform.

S402: Calculate a correlation between each feature category and a credit scoring result according to the credit scoring result samples of the plurality of users and the real-time feature information samples of the plurality of feature categories of each user.

The user credit sample data includes the credit scoring result samples of the plurality of users and the offline feature information samples of the plurality of feature categories of each user. The feature category may be, for example, an age, a location, a gender, or a job. The correlation between each feature category and the credit scoring result reflects impact of the age, the gender, the job, or the like on the credit scoring result of the user. If the correlation is relatively high, it indicates that the feature category relatively greatly affects the credit scoring result; otherwise, it indicates that the feature category slightly affects the credit scoring result. Therefore, real-time feature information of the feature category is not considered when the real-time prediction model is being established.

Specifically, exemplarily, the correlation s between each feature category and the credit scoring result may be calculated by using the following formula:

$$s = \frac{\sum_{i=1}^{n}(z_i - \bar{z})(y_i - \bar{y})}{\sqrt{\sum_{i=1}^{n}(z_i - \bar{z})^2 \cdot \sum_{i=1}^{n}(y_i - \bar{y})^2}}$$

$$= \frac{n\sum_{i=1}^{n}x_i y_i - \sum_{i=1}^{n}x_i \sum_{i=1}^{n}y_i}{\sqrt{n\sum_{i=1}^{n}z_i^2 - (\sum_{i=1}^{n}z_i)^2} \cdot \sqrt{n\sum_{i=1}^{n}y_i^2 - (\sum_{i=1}^{n}y_i)^2}}$$

z being real-time feature information of a feature category, y being a credit scoring result of a user, and the subscript i represents that a different user is corresponding to.

In another optional embodiment, a correlation between real-time feature information of each feature category and the credit scoring result may alternatively be calculated by using a correlation algorithm based on an IV value, a chi-squared value, or the like.

S403: Determine, as a feature category of the real-time feature information, a feature category for which a correlation with the credit scoring result reaches a preset threshold, and select the real-time feature information of the corresponding feature category from the real-time feature information samples of the plurality of feature categories of each user.

After the correlation between each feature category and the credit scoring result is calculated, the correlation may be compared with the corresponding preset threshold, a feature category for which a correlation meets a requirement is determined as the feature category of the real-time feature information, and the real-time feature information of the corresponding feature category is selected from the real-time feature information samples of the plurality of feature categories of each user.

S404: Establish the real-time prediction model according to the selected real-time feature information of the corresponding feature category of each user, and train the real-time prediction model according to the credit scoring result samples of the plurality of users and the real-time feature information of the corresponding feature category of each user.

The real-time prediction model may be a trained logistic regression classification model or a trained integrated learning model, deep learning model, random forest model, or the like. The real-time prediction model may be a prediction formula for the user credit rating apparatus to calculate a credit score of a user according to the selected real-time feature information of the corresponding feature category of each user and in combination with a particular model parameter. Training iterations are performed on a model parameter in the prediction formula by using the credit scoring result samples of the plurality of users and the real-time feature information of the corresponding feature category of each user, thereby obtaining a model parameter in the prediction formula and closest to the credit scoring result samples, and obtaining the trained real-time prediction model.

It should be noted that S402 and S403 are optional steps. In an optional embodiment, all of the obtained real-time feature information samples of the plurality of feature categories of each user may be used, without selection, as the real-time feature information to train the real-time prediction model.

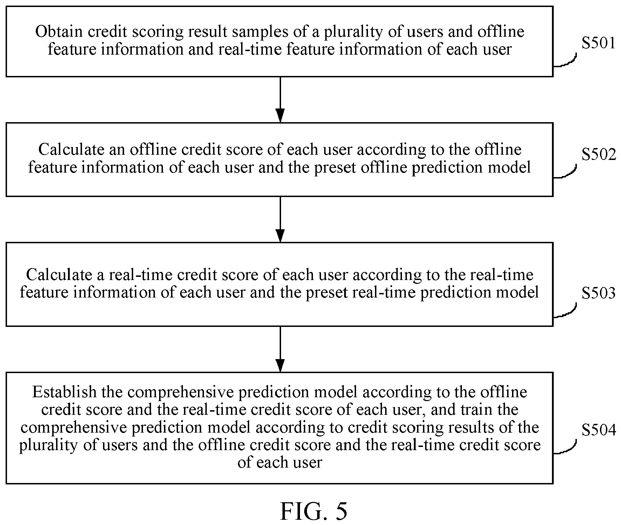

FIG. 5 is a schematic flowchart of training a comprehensive prediction model according to an embodiment of this application.

S501: Obtain credit scoring result samples of a plurality of users and offline feature information and real-time feature information of each user.

Optionally, the credit scoring result samples of the plurality of users and the offline feature information and the real-time feature information of each user may be extracted from the training sample data input to the user credit rating apparatus.

Alternatively, the credit scoring result samples of the plurality of users may be calculated by using default records of the plurality of users. That is, the credit scoring result samples of the plurality of users is determined according to whether the default statuses of the plurality of users, or the number of and the severity of default events, or the like. In an optional embodiment, the credit scoring result samples of the plurality of users may alternatively be obtained by means of human scoring. Further, after the scoring result samples of the plurality of users are obtained, the user credit rating apparatus may obtain the real-time feature information samples of the plurality of feature categories of each user by collecting the user data provided by the third party or from the user data collected by the service platform.

S502: Calculate an offline credit score of each user according to the offline feature information of each user and the preset offline prediction model.

S503: Calculate a real-time credit score of each user according to the real-time feature information of each user and the preset real-time prediction model.

S504: Establish the comprehensive prediction model according to the offline credit score and the real-time credit score of each user, and train the comprehensive prediction model according to credit scoring results of the plurality of users and the offline credit score and the real-time credit score of each user.

The comprehensive prediction model may be a trained logistic regression classification model or a trained integrated learning model, deep learning model, random forest model, gradient boosting decision tree model, or the like. The comprehensive prediction model may be a prediction formula for the user credit rating apparatus to calculate a comprehensive credit score of a user according to the offline credit score and the real-time credit score of the user in combination with a particular model parameter. Training iterations are performed on a model parameter in the prediction formula by using the credit scoring result samples of the plurality of users and the offline credit score and the real-time credit score of each user, thereby obtaining a model parameter in the prediction formula and closest to the credit scoring result samples, and obtaining the trained comprehensive prediction model.

Exemplarily, the real-time credit score of the target user may be calculated by using the comprehensive prediction model of the following logistic regression algorithm:

$$\text{Score} = 1/(1+\exp(-(\alpha*\text{Score}1+\beta*\text{Score}2+\gamma)))$$

a, $\beta$, and $\gamma$ being model parameters obtained by training the model, Score1 and Score2 being respectively the offline credit score and the real-time credit score of the target user, and the result Score being the comprehensive credit score of the target user.

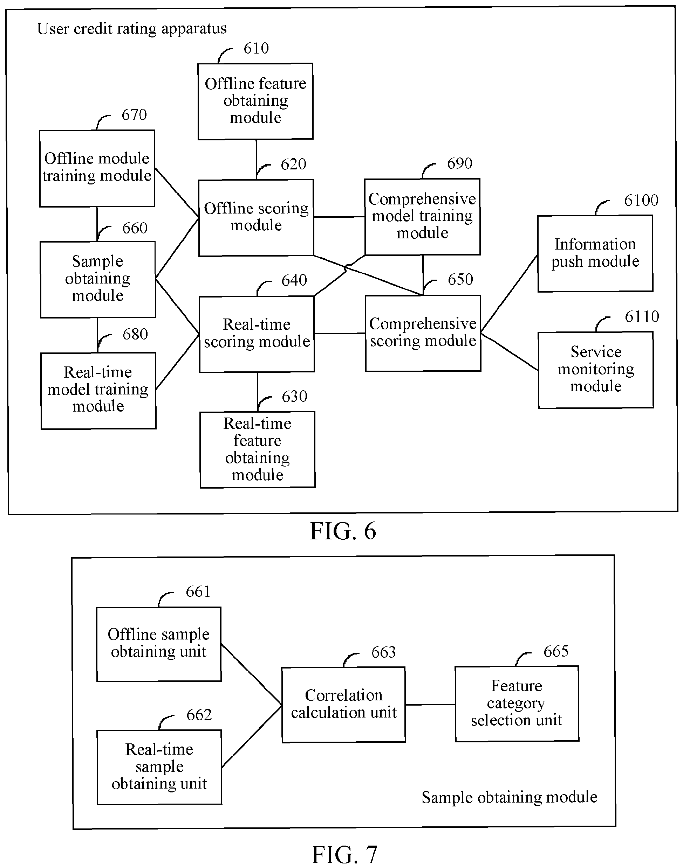

FIG. 6 is a schematic structural diagram of a user credit rating apparatus according to this application. As shown in the figure, the user credit rating apparatus in an embodiment of this application may include an offline feature obtaining module 610, an offline scoring module 620, a real-time feature obtaining module 630, a real-time scoring module 640, and a comprehensive scoring module 650.

The offline feature obtaining module 610 is configured to obtain offline feature information of a target user, the offline feature information being feature information of the user updated according to a preset update period.

As shown in FIG. 2, the offline feature obtaining module 610 may obtain the offline feature information by collecting user data provided by a third party or may obtain the offline feature information from user data collected by a service platform. The offline feature obtaining module 610 may perform feature calculation on the obtained user data, and convert a user attribute, a user behavior, or a user attribute/behavior in the user data into offline feature information having a unified format, for example, digitalized feature information. The preset update period may be an update period for an external manufacturer to provide user data, or may be a collection update period set by the offline feature obtaining module 610. Because bit data involves a large user base, and the offline feature information may include all historical feature information of a user, there is an enormous amount of data. Therefore, the preset update period is relatively long, and is usually at least one week to one month. In an optional embodiment, the offline feature information may be relatively stable feature information of the user, for example, an attribute such as a gender, an age, a native place, a job, or earnings, and may further include all historical contract-related credit records. Such relatively stable feature information of the user only needs to be updated according to the preset update period. Therefore, information of these feature categories is used as the offline feature information.

In an optional embodiment, the offline feature information may be selected offline feature information of a feature category. That is, the user data provided by the third party or the user data collected by the service platform may include offline feature information of a plurality of feature categories, and the offline feature obtaining module 610 may select offline feature information of a specified feature category from the offline feature information of the plurality of feature categories. The specified feature category may be obtained by the user credit rating apparatus according to preset training sample data. The training sample data includes credit scoring result samples of a plurality of users and offline feature information samples of a plurality of feature categories of each user. The training sample data is also referred to as user credit sample data. The user credit rating apparatus calculates a correlation between each feature category and a credit scoring result according to the credit scoring result samples of the plurality of users and the offline feature information samples of the plurality of feature categories of each user in the user credit sample data, so as to determine, as the specified feature category, a feature category for which a correlation with the credit scoring result reaches a preset threshold.

The offline scoring module 620 is configured to calculate an offline credit score of the target user according to the offline feature information of the target user and a preset offline prediction model.

The offline prediction model may be a trained logistic regression classification model or a trained integrated learning model, deep learning model, random forest model, or the like. The offline scoring module 620 substitutes the offline feature information of the target user into the preset offline prediction model, so as to calculate the offline credit score of the target user.

The offline prediction model may be obtained by the user credit rating apparatus by performing training according to preset training sample data. The training sample data may include the credit scoring result samples of the plurality of users and the offline feature information of each user. The offline prediction model may alternatively be a trained offline prediction model obtained by the user credit rating apparatus from the external.

The real-time feature obtaining module 630 is configured to obtain real-time feature information of the target user, the real-time feature information being feature information of the user collected in a preset time range from a current time, and the preset time range being less than the preset update period.

As shown in FIG. 2, the real-time feature obtaining module 630 may obtain the real-time feature information from user data collected by a service platform. The real-time feature obtaining module 630 may perform feature calculation on the obtained user data, and convert a user attribute, a user behavior, or a user attribute/behavior in the user data into real-time feature information having a unified format, for example, digitalized feature information. The service platform may collect latest feature information of the user, the preset time range being less than the preset update period, for example, the feature information of the user collected in one or two recent days or in a recent week. In an optional embodiment, the user credit rating apparatus may preset some feature categories as high-risk features. When feature information of the user and corresponding to the high-risk features changes, a credit score of the user is greatly affected. For example, the user enables a loan service on a particular platform or applies for an overseas visa, a geographic location of the user changes, or a large spending amount is produced in a particular field. For these high-risk features that need to be focused in real time, the real-time feature obtaining module 630 may use the corresponding feature information as the real-time feature information of the user for real-time collection and recording. Other feature information is used as the offline feature information for updating the preset update period.

Likewise, the real-time feature information may be selected real-time feature information of a feature category. That is, the user data provided by the third party or the user data collected by the service platform may include real-time feature information of a plurality of feature categories, and the real-time feature obtaining module 630 may select real-time feature information of a specified feature category from the real-time feature information of the plurality of feature categories. The specified feature category may be obtained by the user credit rating apparatus according to preset training sample data. The training sample data includes credit scoring result samples of a plurality of users and real-time feature information samples of a plurality of feature categories of each user. The training sample data is referred to as user credit sample data. The user credit rating apparatus calculates a correlation between each feature category and a credit scoring result according to the credit scoring result samples of the plurality of users and the real-time feature information samples of the plurality of feature categories of each user in the user credit sample data, so as to determine, as the specified feature category, a feature category for which a correlation with the credit scoring result reaches a preset threshold.

The real-time scoring module 640 is configured to calculate a real-time credit score of the target user according to the real-time feature information of the target user and a preset real-time prediction model.

The real-time prediction model may be a trained logistic regression classification model or a trained integrated learning model, deep learning model, random forest model, or the like. The user credit rating apparatus substitutes the real-time feature information of the target user into the preset real-time prediction model, so as to calculate the real-time credit score of the target user.

The real-time prediction model may be obtained by the user credit rating apparatus by performing training according to preset training sample data. The training sample data may include the credit scoring result samples of the plurality of users and the offline feature information of each user. The real-time prediction model may alternatively be a trained real-time prediction model obtained by the user credit rating apparatus from the external.

The comprehensive scoring module 650 is configured to calculate a comprehensive credit score of the target user according to the obtained offline credit score and real-time credit score of the target user in combination with a preset comprehensive prediction model.

The comprehensive prediction model may be a trained logistic regression classification model or a trained integrated learning model, deep learning model, random forest model, gradient boosting decision tree model, or the like. The comprehensive scoring module 650 substitutes the offline credit score and the real-time credit score of the target user into the preset real-time prediction model, so as to calculate the real-time credit score of the target user.

The comprehensive prediction model may be obtained by the user credit rating apparatus by performing training according to preset training sample data. The training sample data may include the credit scoring result samples of the plurality of users and the offline feature information and the real-time feature information of each user. After obtaining the offline credit score of each user by using the offline prediction model according to the offline feature information of each user and obtaining the real-time credit score of each user by using the real-time prediction model according to the real-time feature information of each user, the user credit rating apparatus trains the comprehensive prediction model according to credit scoring results of the plurality of users and the offline credit score and the real-time credit score of each user. The real-time prediction model may alternatively be a trained real-time prediction model obtained by the user credit rating apparatus from the external.

Exemplarily, the real-time credit score of the target user may be calculated by using the comprehensive prediction model of the following logistic regression algorithm:

$$\text{Score} = 1/(1+\exp((\alpha*\text{Score}1+\beta*\text{Score}2+\gamma)))$$

$\alpha$, $\beta$, and $\gamma$ being parameters obtained by training the model, Score 1 and Score2 being respectively the offline credit score and the real-time credit score of the target user, and the result Score being the comprehensive credit score of the target user.

According to the user credit rating apparatus provided in this application, the offline credit score and the real-time credit score of the user are respectively calculated by obtaining the offline feature information and the real-time feature information of the user, so as to calculate the comprehensive credit score of the user, thereby accurately predicting a credit status of the user in combination with long-term feature data and real-time feature data of the user, and resolving a problem of inaccurate credit rating caused by an information lag of the user in the prior art.

In an optional embodiment, the user credit rating apparatus may further include a sample obtaining module 660 and an offline module training module 670.

The sample obtaining module 660 is configured to obtain credit scoring result samples of a plurality of users and offline feature information of each user.

Optionally, the credit scoring result samples of the plurality of users and the offline feature information of each user may be extracted from the training sample data input to the user credit rating apparatus.

Alternatively, the credit scoring result samples of the plurality of users may be calculated by using default records of the plurality of users. That is, the credit scoring result samples of the plurality of users is determined according to whether the default statuses of the plurality of users, or the number of and the severity of default events, or the like. In an optional embodiment, the credit scoring result samples of the plurality of users may alternatively be obtained by means of human scoring. Further, after the scoring result samples of the plurality of users are obtained, the sample obtaining module 660 may obtain the offline feature information of each user by collecting the user data provided by the third party or from the user data collected by the service platform.

The offline module training module 670 is configured to: establish the offline prediction model according to the offline feature information of each user, and train the offline prediction model according to the credit scoring result samples of the plurality of users and the offline feature information of each user.

The offline prediction model may be a trained logistic regression classification model or a trained integrated learning model, deep learning model, random forest model, or the like. The offline prediction model may be a prediction formula for calculating a credit score of a user according to the selected offline feature information of the corresponding feature category of each user and in combination with a particular model parameter. The offline module training module 670 performs training iterations on a model parameter in the prediction formula by using the credit scoring result samples of the plurality of users and the offline feature information of the corresponding feature category of each user, thereby obtaining a model parameter in the prediction formula and closest to the credit scoring result samples, and obtaining the trained offline prediction model.

Further, optionally, as shown in FIG. 7, the sample obtaining module 660 may further include an offline sample obtaining unit 661, a correlation calculation unit 663, and a feature category selection unit 665.

The offline sample obtaining unit 661 is configured to obtain the credit scoring result samples of the plurality of users and offline feature information samples of a plurality of feature categories of each user.

The correlation calculation unit 663 is configured to calculate a correlation between each feature category and a credit scoring result according to the credit scoring result samples of the plurality of users and the offline feature information samples of the plurality of feature categories of each user.

The feature category may be, for example, an age, a location, a gender, or a job. The correlation between each feature category and the credit scoring result reflects impact of the age, the gender, the job, or the like on the credit scoring result of the user. If the correlation is relatively high, it indicates that the feature category relatively greatly affects the credit scoring result; otherwise, it indicates that the feature category slightly affects the credit scoring result. Therefore, offline feature information of the feature category is not considered when the offline prediction model is being established.

Specifically, exemplarily, the correlation r between each feature category and the credit scoring result may be calculated by using the following formula:

$$r = \frac{\sum_{i=1}^{n}(x_i - \bar{x})(y_i - \bar{y})}{\sqrt{\sum_{i=1}^{n}(x_i - \bar{x})^2 \cdot \sum_{i=1}^{n}(y_i - \bar{y})^2}}$$

$$= \frac{n\sum_{i=1}^{n}x_i y_i - \sum_{i=1}^{n}x_i \sum_{i=1}^{n}y_i}{\sqrt{n\sum_{i=1}^{n}x_i^2 - (\sum_{i=1}^{n}x_i)^2} \cdot \sqrt{n\sum_{i=1}^{n}y_i^2 - (\sum_{i=1}^{n}y_i)^2}}$$

x being offline feature information of a feature category, y being a credit scoring result of a user, and the subscript i represents that a different user is corresponding to.

In another optional embodiment, the correlation between each feature category and the credit scoring result may alternatively be calculated by using a correlation algorithm based on an IV value, a chi-squared value, or the like.

The feature category selection unit 665 is configured to: determine, as a feature category of the offline feature information, a feature category for which a correlation with the credit scoring result reaches a preset threshold, and select the offline feature information of the corresponding feature category from the offline feature information samples of the plurality of feature categories of each user.

In an optional embodiment, the sample obtaining module 660 is configured to obtain credit scoring result samples of a plurality of users and real-time feature information of each user.

Optionally, the credit scoring result samples of the plurality of users and the real-time feature information of each user may be extracted from the training sample data input to the user credit rating apparatus.

Alternatively, the credit scoring result samples of the plurality of users may be calculated by using default records of the plurality of users. That is, the credit scoring result samples of the plurality of users is determined according to whether the default statuses of the plurality of users, or the number of and the severity of default events, or the like. In an optional embodiment, the credit scoring result samples of the plurality of users may alternatively be obtained by means of human scoring. Further, after the scoring result samples of the plurality of users are obtained, the user credit rating apparatus may obtain the real-time feature information of each user from the user data collected by the service platform.

The user credit rating apparatus may further include a real-time model training module 680, configured to: establish the real-time prediction model according to the real-time feature information of each user, and train the real-time prediction model according to the credit scoring result samples of the plurality of users and the real-time feature information of each user.

The real-time prediction model may be a trained logistic regression classification model or a trained integrated learning model, deep learning model, random forest model, or the like. The real-time prediction model may be a prediction formula for the user credit rating apparatus to calculate a credit score of a user according to the selected real-time feature information of the corresponding feature category of each user and in combination with a particular model parameter. The real-time model training module 680 performs training iterations on a model parameter in the prediction formula by using the credit scoring result samples of the plurality of users and the real-time feature information of the corresponding feature category of each user, thereby obtaining a model parameter in the prediction formula and closest to the credit scoring result samples, and obtaining the trained real-time prediction model.

Further, optionally, as shown in FIG. 7, the sample obtaining module may further include a real-time sample obtaining unit 662, a correlation calculation unit 663, and a feature category selection unit 665.

The real-time sample obtaining unit 662 is configured to obtain the credit scoring result samples of the plurality of users and real-time feature information samples of a plurality of feature categories of each user.

The correlation calculation unit 663 is configured to calculate a correlation between each feature category and a credit scoring result according to the credit scoring result samples of the plurality of users and the real-time feature information samples of the plurality of feature categories of each user.

The feature category may be, for example, an age, a location, a gender, or a job. The correlation between each feature category and the credit scoring result reflects impact of the age, the gender, the job, or the like on the credit scoring result of the user. If the correlation is relatively high, it indicates that the feature category relatively greatly affects the credit scoring result; otherwise, it indicates that the feature category slightly affects the credit scoring result. Therefore, real-time feature information of the feature category is not considered when the real-time prediction model is being established.

Specifically, exemplarily, the correlation s between each feature category and the credit scoring result may be calculated by using the following formula:

$$s = \frac{\sum_{i=1}^{n}(z_i - \bar{z})(y_i - \bar{y})}{\sqrt{\sum_{i=1}^{n}(z_i - \bar{z})^2 \cdot \sum_{i=1}^{n}(y_i - \bar{y})^2}}$$

$$= \frac{n\sum_{i=1}^{n}x_i y_i - \sum_{i=1}^{n}x_i \sum_{i=1}^{n}y_i}{\sqrt{n\sum_{i=1}^{n}z_i^2 - (\sum_{i=1}^{n}z_i)^2} \cdot \sqrt{n\sum_{i=1}^{n}y_i^2 - (\sum_{i=1}^{n}y_i)^2}}$$

z being real-time feature information of a feature category, y being a credit scoring result of a user, and the subscript i represents that a different user is corresponding to.

In another optional embodiment, a correlation between real-time feature information of each feature category and the credit scoring result may alternatively be calculated by using a correlation algorithm based on an IV value, a chi-squared value, or the like.

The feature category selection unit 665 is configured to: determine, as a feature category of the real-time feature information, a feature category for which a correlation with the credit scoring result reaches a preset threshold, and select the real-time feature information of the corresponding feature category from the real-time feature information samples of the plurality of feature categories of each user.

After the correlation between each feature category and the credit scoring result is calculated, the feature category selection unit 665 may compare the correlation with the corresponding preset threshold, determine a feature category for which a correlation meets a requirement as the feature category of the real-time feature information, and select the real-time feature information of the corresponding feature category from the real-time feature information samples of the plurality of feature categories of each user.

In an optional embodiment, the sample obtaining module 660 is configured to obtain credit scoring result samples of a plurality of users and offline feature information and real-time feature information of each user.

Optionally, the credit scoring result samples of the plurality of users and the offline feature information and the real-time feature information of each user may be extracted from the training sample data input to the user credit rating apparatus.

Alternatively, the credit scoring result samples of the plurality of users may be calculated by using default records of the plurality of users. That is, the credit scoring result samples of the plurality of users is determined according to whether the default statuses of the plurality of users, or the number of and the severity of default events, or the like. In an optional embodiment, the credit scoring result samples of the plurality of users may alternatively be obtained by means of human scoring. Further, after the scoring result samples of the plurality of users are obtained, the sample obtaining module 660 may obtain the real-time feature information samples of the plurality of feature categories of each user by collecting the user data provided by the third party or from the user data collected by the service platform.

The offline scoring module 620 is further configured to calculate an offline credit score of each user according to the offline feature information of each user and the preset offline prediction model.

The real-time scoring module 640 is further configured to calculate a real-time credit score of each user according to the real-time feature information of each user and the preset real-time prediction model.

The user credit rating apparatus may further include:
a comprehensive model training module 690, configured to: establish the comprehensive prediction model according to the offline credit score and the real-time credit score of each user, and train the comprehensive prediction model according to credit scoring results of the plurality of users and the offline credit score and the real-time credit score of each user.

The comprehensive prediction model may be a trained logistic regression classification model or a trained integrated learning model, deep learning model, random forest model, gradient boosting decision tree model, or the like. The comprehensive prediction model may be a prediction formula for the user credit rating apparatus to calculate a comprehensive credit score of a user according to the offline credit score and the real-time credit score of the user in combination with a particular model parameter. Training iterations are performed on a model parameter in the prediction formula by using the credit scoring result samples of the plurality of users and the offline credit score and the real-time credit score of each user, thereby obtaining a model parameter in the prediction formula and closest to the credit scoring result samples, and obtaining the trained comprehensive prediction model.

Exemplarily, the real-time credit score of the target user may be calculated by using the comprehensive prediction model of the following logistic regression algorithm:

$$\text{Score} = 1/(1+\exp(-(\alpha*\text{Score1}+\beta*\text{Score2}+\gamma)))$$

$\alpha$, $\beta$, and $\gamma$ being model parameters obtained by training the model, Score1 and Score2 being respectively the offline credit score and the real-time credit score of the target user, and the result Score being the comprehensive credit score of the target user.

Further, in an optional embodiment, the user credit rating apparatus may further include an information push module 6100 or a service monitoring module 6110.

The information push module 6100 is configured to push product information to the target user according to the comprehensive credit score of the target user, that is, pushing product information such as financial product information or fixed asset management product information to the target user according to the comprehensive credit score of the target user calculated by the comprehensive scoring module 650 in this embodiment of this application.

The service monitoring module 6110 is configured to monitor and manage a data service of the target user according to the comprehensive credit score of the target user, for example, performing risk control management on a loan service of the target user or providing a management suggestion for flowing funds of the target user.

According to the user credit rating apparatus provided in this embodiment of this application, the offline credit score and the real-time credit score of the user are respectively calculated by obtaining the offline feature information and the real-time feature information of the user, so as to calculate the comprehensive credit score of the user, thereby accurately predicting a credit status of the user in combination with long-term feature data and real-time feature data of the user, and resolving a problem of inaccurate credit rating caused by an information lag of the user in the prior art.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium may be a magnetic disk, an optical disc, a read-only memory (ROM), a random access memory RAM, or the like.

The foregoing descriptions are merely preferred embodiments of this application, but are not intended to limit this application. Therefore, equivalent changes made according to the claims of this application still fall within the scope of this application.

**Claims**

1. A user credit rating method, comprising:

   obtaining offline feature information of a target user, the offline feature information being feature information of the user updated according to a preset update period;
   calculating an offline credit score of the target user according to the offline feature information of the target user and a preset offline prediction model;
   obtaining real-time feature information of the target user, the real-time feature information being feature information of the user collected in a preset time range from a current time, and the preset time range being less than the preset update period;
   calculating a real-time credit score of the target user according to the real-time feature information of the target user and a preset real-time prediction model; and
   calculating a comprehensive credit score of the target user according to the offline credit score, the real-time credit score, and a preset comprehensive prediction model.

2. The user credit rating method according to claim 1, before the obtaining offline feature information of a target user, the method further comprising:

   obtaining credit scoring result samples of a plurality of users and offline feature information of each user; and
   establishing the offline prediction model, training the offline prediction model according to the credit scoring result samples of the plurality of users and the offline feature information of each user, and obtaining a model parameter of the offline prediction model.

3. The user credit rating method according to claim 2, the obtaining credit scoring result samples of a plurality of users and offline feature information of each user comprising:

   obtaining the credit scoring result samples of the plurality of users and offline feature information samples of a plurality of feature categories of each user;
   calculating a correlation between each feature category and a credit scoring result according to the credit scoring result samples of the plurality of users and the offline feature information samples of the plurality of feature categories of each user; and
   determining, as a feature category of the offline feature information, a feature category for which a correlation with the credit scoring result reaches a preset threshold, and selecting the offline feature information of the determined feature category from the offline feature information samples of the plurality of feature categories of each user.

4. The user credit rating method according to claim 1, before the obtaining real-time feature information of the user, further comprising:

   obtaining credit scoring result samples of a plurality of users and real-time feature information of each user; and
   establishing the real-time prediction model, training the real-time prediction model according to the credit scoring result samples of the plurality of users and the real-time feature information of each user, and obtaining a model parameter of the real-time prediction model.

5. The user credit rating method according to claim 4, the obtaining credit scoring result samples of a plurality of users and real-time feature information of each user comprising:

obtaining the credit scoring result samples of the plurality of users and real-time feature information samples of a plurality of feature categories of each user;

calculating a correlation between each feature category and a credit scoring result according to the credit scoring result samples of the plurality of users and the real-time feature information samples of the plurality of feature categories of each user; and

determining, as a feature category of the real-time feature information, a feature category for which a correlation with the credit scoring result reaches a preset threshold, and selecting the real-time feature information of the determined feature category from the real-time feature information samples of the plurality of feature categories of each user.

6. The user credit rating method according to claim 1, before the calculating a comprehensive credit score of the target user according to the obtained offline credit score and real-time credit score of the target user in combination with a preset comprehensive prediction model, further comprising:

obtaining credit scoring result samples of a plurality of users and offline feature information and real-time feature information of each user;

calculating an offline credit score of each user according to the offline feature information of each user and the preset offline prediction model;

calculating a real-time credit score of each user according to the real-time feature information of each user and the preset real-time prediction model; and

establishing the comprehensive prediction model, training the comprehensive prediction model according to credit scoring results of the plurality of users and the offline credit score and the real-time credit score of each user, and obtaining a model parameter of the comprehensive prediction model.

7. The user credit rating method according to claim 1, wherein the real-time feature information comprises user data collected by a service platform; and

the offline feature information comprises user data provided by a third party or the user data collected by the service platform.

8. The user credit rating method according to any one of claims 1 to 7, wherein the method further comprises:

pushing product information to the target user according to the comprehensive credit score of the target user; or

monitoring and managing a data service of the target user according to the comprehensive credit score of the target user.

9. A user credit rating apparatus, comprising:

an offline feature obtaining module, configured to obtain offline feature information of a target user, the offline feature information being feature information of the user updated according to a preset update period;

an offline scoring module, configured to calculate an offline credit score of the target user according to the offline feature information of the target user and a preset offline prediction model;

a real-time feature obtaining module, configured to obtain real-time feature information of the target user, the real-time feature information being feature information of the user collected in a preset time range from a current time, and the preset time range being less than the preset update period;

a real-time scoring module, configured to calculate a real-time credit score of the target user according to the real-time feature information of the target user and a preset real-time prediction model; and

a comprehensive scoring module, configured to calculate a comprehensive credit score of the target user according to the offline credit score, the real-time credit score, and a preset comprehensive prediction model.

10. The user credit rating apparatus according to claim 9, wherein the apparatus further comprises:

a sample obtaining module, configured to obtain credit scoring result samples of a plurality of users and offline feature information of each user; and

an offline module training module, configured to: establish the offline prediction model, train the offline prediction model according to the credit scoring result samples of the plurality of users and the offline feature information of each user, and obtain a model parameter of the offline prediction model.

**11.** The user credit rating apparatus according to claim 10, wherein the sample obtaining module comprises:

an offline sample obtaining unit, configured to obtain the credit scoring result samples of the plurality of users and offline feature information samples of a plurality of feature categories of each user;
a correlation calculation unit, configured to calculate a correlation between each feature category and a credit scoring result according to the credit scoring result samples of the plurality of users and the offline feature information samples of the plurality of feature categories of each user; and
a feature category selection unit, configured to: determine, as a feature category of the offline feature information, a feature category for which a correlation with the credit scoring result reaches a preset threshold, and select the offline feature information of the determined feature category from the offline feature information samples of the plurality of feature categories of each user.

**12.** The user credit rating apparatus according to claim 9, wherein the apparatus further comprises:

a sample obtaining module, configured to obtain credit scoring result samples of a plurality of users and real-time feature information of each user; and
a real-time model training module, configured to: establish the real-time prediction model, train the real-time prediction model according to the credit scoring result samples of the plurality of users and the real-time feature information of each user, and obtain a model parameter of the real-time prediction model.

**13.** The user credit rating apparatus according to claim 12, wherein the sample obtaining module comprises:

a real-time sample obtaining unit, configured to obtain the credit scoring result samples of the plurality of users and real-time feature information samples of a plurality of feature categories of each user;
a correlation calculation unit, configured to calculate a correlation between each feature category and a credit scoring result according to the credit scoring result samples of the plurality of users and the real-time feature information samples of the plurality of feature categories of each user; and
a feature category selection unit, configured to: determine, as a feature category of the real-time feature information, a feature category for which a correlation with the credit scoring result reaches a preset threshold, and select the real-time feature information of the determined feature category from the real-time feature information samples of the plurality of feature categories of each user.

**14.** The user credit rating apparatus according to claim 9, wherein the apparatus further comprises:

a sample obtaining module, configured to obtain credit scoring result samples of a plurality of users and offline feature information and real-time feature information of each user;
the offline scoring module being further configured to calculate an offline credit score of each user according to the offline feature information of each user and the preset offline prediction model; and
the real-time scoring module being further configured to calculate a real-time credit score of each user according to the real-time feature information of each user and the preset real-time prediction model; and
a comprehensive model training module, configured to: establish the comprehensive prediction model, train the comprehensive prediction model according to credit scoring results of the plurality of users and the offline credit score and the real-time credit score of each user, and obtain a model parameter of the comprehensive prediction model.

**15.** The user credit rating apparatus according to claim 9, wherein the real-time feature information comprises user data collected by a service platform; and
the offline feature information comprises user data provided by a third party and the user data collected by the service platform.

**16.** The user credit rating apparatus according to any one of claims 9 to 15, wherein the apparatus further comprises:

an information push module, configured to push product information to the target user according to the comprehensive credit score of the target user; or
a service monitoring module, configured to monitor and manage a data service of the target user according to the comprehensive credit score of the target user.

**17.** A computer readable storage medium, storing computer readable instructions which enable at least one processor to execute the method according to any one of claims 1 to 8.

| Obtain offline feature information of a target user, the offline feature information being feature information of the user updated according to a preset update period | S101 |

↓

| Calculate an offline credit score of the target user according to the offline feature information of the target user and a preset offline prediction model | S102 |

↓

| Obtain real-time feature information of the target user, the real-time feature information being feature information of the user collected in a preset time range from a current time, and the preset time range being less than the preset update period | S103 |

↓

| Calculate a real-time credit score of the target user according to the real-time feature information of the target user and a preset real-time prediction model | S104 |

↓

| Calculate a comprehensive credit score of the target user according to the offline credit score, the real-time credit score, and a preset comprehensive prediction model | S105 |

FIG. 1

Offline feature information of a user   Real-time feature information of the user

↑             ↑

| Offline data collection | | |
|---|---|---|
| User data provided by a third party | User data on a service platform | |

| Real-time data collection | |
|---|---|
| User data on the service platform | |

External manufacturer 1  External manufacturer 2

Service platform

FIG. 2

Obtain the credit scoring result samples of the plurality of users and offline feature information samples of a plurality of feature categories of each user — S301

Calculate a correlation between each feature category and a credit scoring result according to the credit scoring result samples of the plurality of users and the offline feature information samples of the plurality of feature categories of each user in user credit sample data — S302

Determine, as a feature category of the offline feature information, a feature category for which a correlation with the credit scoring result reaches a preset threshold, and select the offline feature information of the corresponding feature category from the offline feature information samples of the plurality of feature categories of each user — S303

Establish the offline prediction model according to the selected offline feature information of the corresponding feature category of each user, and train the offline prediction model according to the credit scoring result samples of the plurality of users and the offline feature information of the corresponding feature category of each user — S304

FIG. 3

| Obtain the credit scoring result samples of the plurality of users and real-time feature information samples of a plurality of feature categories of each user | S401 |

| Calculate a correlation between each feature category and a credit scoring result according to the credit scoring result samples of the plurality of users and the real-time feature information samples of the plurality of feature categories of each user in user credit sample data | S402 |

| Determine, as a feature category of the real-time feature information, a feature category for which a correlation with the credit scoring result reaches a preset threshold, and select the real-time feature information of the corresponding feature category from the real-time feature information samples of the plurality of feature categories of each user | S403 |

| Establish the real-time prediction model according to the selected real-time feature information of the corresponding feature category of each user, and train the real-time prediction model according to the credit scoring result samples of the plurality of users and the real-time feature information of the corresponding feature category of each user | S404 |

FIG. 4

Obtain credit scoring result samples of a plurality of users and offline feature information and real-time feature information of each user

S501

Calculate an offline credit score of each user according to the offline feature information of each user and the preset offline prediction model

S502

Calculate a real-time credit score of each user according to the real-time feature information of each user and the preset real-time prediction model

S503

Establish the comprehensive prediction model according to the offline credit score and the real-time credit score of each user, and train the comprehensive prediction model according to credit scoring results of the plurality of users and the offline credit score and the real-time credit score of each user

S504

FIG. 5

User credit rating apparatus

*610*

Offline feature
obtaining
module

*670*

Offline module
training module

*620*

Offline scoring
module

*690*

Comprehensive
model training
module

*6100*

Information
push module

*660*

Sample
obtaining
module

*640*

Real-time
scoring module

*650*

Comprehensive
scoring module

*6110*

Service
monitoring
module

*680*

Real-time
model training
module

*630*

Real-time
feature
obtaining
module

## FIG. 6

*661*

Offline sample
obtaining unit

*662*

Real-time
sample
obtaining unit

*663*

Correlation
calculation unit

*665*

Feature
category
selection unit

Sample obtaining module

## FIG. 7

<div align="center">

# INTERNATIONAL SEARCH REPORT

</div>

| International application No. |
| --- |
| **PCT/CN2017/085049** |

**A. CLASSIFICATION OF SUBJECT MATTER**

G06Q 10/06 (2012.01) i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, CNKI, WPI, EPODOC, GOOGLE: user, scoring, real-time, off-line, credit, personal, individual, customer, evaluat+, model, history, off, line, real, time, train

**C. DOCUMENTS CONSIDERED TO BE RELEVANT**

| Category* | Citation of document, with indication, where appropriate, of the relevant passages | Relevant to claim No. |
| --- | --- | --- |
| Y | CN 104866969 A (BAIDU ONLINE NETWORK TECHNOLOGY (BEIJING) CO., LTD.), 26 August 2015 (26.08.2015), description, paragraphs [0024]-[0034] and [0109] | 1-17 |
| Y | CN 101996381 A (INDUSTRIAL AND COMMERCIAL BANK OF CHINA LIMITED), 30 March 2011 (30.03.2011), description, paragraphs [0025]-[0039] | 1-17 |
| PX | CN 106127363 A (TENCENT TECHNOLOGY (SHENZHEN) CO., LTD.), 16 November 2016 (16.11.2016), claims 1-16, and description, paragraph [0155] | 1-17 |
| PX | CN 106097043 A (TENCENT TECHNOLOGY (SHENZHEN) CO., LTD.), 09 November 2016 (09.11.2016), description, paragraphs [0077]-[0219] | 1-17 |
| A | CN 105260471 A (GUANGZHOU VIPSHOP INFORMATION TECHNOLOGY CO., LTD.), 20 January 2016 (20.01.2016), the whole document | 1-17 |
| A | KR 20120114713 A (NICE INFORMATION SERVICE CO., LTD.), 17 October 2012 (17.10.2012), the whole document | 1-17 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 12 July 2017 (12.07.2017) | **26 July 2017 (26.07.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Dandan** Telephone No.: (86-10) **62413305** |
| --- | --- |

Form PCT/ISA/210 (second sheet) (July 2009)

## INTERNATIONAL SEARCH REPORT
### Information on patent family members

International application No.

**PCT/CN2017/085049**

| Patent Documents referred in the Report | Publication Date | Patent Family | Publication Date |
|---|---|---|---|
| CN 104866969 A | 26 August 2015 | None | |
| CN 101996381 A | 30 March 2011 | None | |
| CN 106127363 A | 16 November 2016 | None | |
| CN 106097043 A | 09 November 2016 | None | |
| CN 105260471 A | 20 January 2016 | None | |
| KR 20120114713 A | 17 October 2012 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201610416661